# EUROPEAN PATENT APPLICATION

(11) **EP 4 535 875 A1**
(43) Date of publication of application: **09.04.2025**
(21) Application number: 24201722.6
(22) Date of filing: 20.09.2024
(51) Int. Cl.: H04W 48/18, H04W 76/18, H04W 48/02, H04W 60/00, H04W 60/04

(54) **DISABLING N1 MODE UPON RECEIVING A 5GMM CAUSE VALUE MESSAGE**

(30) Priority: 02.10.2023 GB 202315079
(71) Applicant: Nokia Technologies Oy, 02610 Espoo (FI)
(72) Inventor: LEON CALVO, Jose Angel, Munich (DE); WON, Sung Hwan, Flower Mound, Texas (US)
(74) Representative: Cohausz & Florack

(57) **Abstract**

A method includes transmitting, by a user equipment (UE), a registration request message to a network node according to a non-access stratum (NAS) protocol, the registration request message including a request for one or more single-network slice selection assistance informations (S-NSSAIs) in a first network. The UE receives a registration reject message from the network node, the registration reject message including a 5G system mobility management (5GMM) cause value #62 "no network slices available" indication. The UE disables N1 mode capability for the first network based upon the receiving the registration reject message, stores an identity of the first network, and, after storing, exploits the stored identity of the first network, by the UE, during a network selection process.

## Description

### FIELD

Various example embodiments relate generally to wireless networks and, more particularly, to disabling N1 mode upon receiving a 5G mobility management (5GMM) cause value message.

### BACKGROUND

In order to engage in 5G mobility management (5GMM), a user equipment (UE) registers with the network using non-access stratum (NAS) protocol by transmitting a registration request message. The network informs the UE whether network slices are available, and allows registration of the UE if there are network slices available. If no network slices are available, the network responds to a request to register by the UE with a registration reject message, in which case the UE may disable N1 mode capability. However, unless another radio access technology (RAT) is provided to the UE, the UE will continue to re-enable N1 mode capability, and send the registration request to the same network indefinitely, potentially causing an excess of resources to be utilized.

### SUMMARY

In an aspect of the present disclosure, a method includes transmitting, by a user equipment (UE), a registration request message to a network node according to a non-access stratum (NAS) protocol, the registration request message including a request for one or more single-network slice selection assistance informations (S-NSSAIs) in a first network. The UE receives a registration reject message from the network node, the registration reject message including a 5G system mobility management (5GMM) cause value #62 "no network slices available" indication. The UE disables N1 mode capability for the first network based upon the receiving the registration reject message, stores an identity of the first network, and, after storing, exploits the stored identity of the first network, by the UE, during a network selection process.

In an aspect of the method, the 5GMM cause value #62 "no network slices available" indication includes a cause "S-NSSAI not available due the failed or revoked network slice-specific authentication" indication.

In an aspect of the method, the first network is a public land mobile network (PLMN) or a stand-alone public network (SNPN).

In an aspect of the method, the 5GMM cause value #62 "no network slices available" indication includes a cause "S-NSSAI not available in the current PLMN or SNPN" indication.

In an aspect of the method, the method further includes adding, by the UE, the identity of the PLMN to a list of PLMNs for which the UE disabled N1 mode capability.

In an aspect of the method, the method further includes starting a timer after disabling N1 mode capability.

In an aspect of the method, the timer is a *T_{NSU}* timer.

In an aspect of the method, a value of the timer *T_{NSU}* does not exceed a background timer value.

In an aspect of the method, the method further includes discarding, by the UE, the PLMN for which the identity was added to the list during the network selection process.

In an aspect of the method, the method further includes deleting, by the UE, the identity of the PLMN from the list upon the UE being switched off.

In an aspect of the method, the method further includes deleting, by the UE, the identity of the PLMN from the list upon removal of a universal subscriber identity module from the UE.

In an aspect of the method, the method further includes deleting, by the UE, the identity of the PLMN from the list upon receiving a registration accept message.

In an aspect of the method, the method further includes deleting, by the UE, the identity of the PLMN from the list upon removing an S-NSSAI from a rejected NSSAI for a failed or revoked network slice-specific authentication and authorization (NSSAA) service.

In an aspect of the method, the method further includes adding, by the UE, the identity of the SNPN to a list of SNPNs for which the UE disabled N1 mode capability.

In an aspect of the method, the method further includes starting a timer after disabling N1 mode capability.

In an aspect of the method, the timer is a *T_{NSU_SNPN}* timer.

In an aspect of the method, a value of the timer *T_{NSU_SNPN}* does not exceed a background timer value.

In an aspect of the method, the method further includes discarding, by the UE, the SNPN for which the identity was added to the list during the network selection process.

In an aspect of the method, the method further includes deleting, by the UE, the identity of the SNPN from the list upon the UE being switched off.

In an aspect of the method, the method further includes deleting, by the UE, the identity of the SNPN from the list upon removal of a universal subscriber identity module from the UE.

In an aspect of the method, the method further includes deleting, by the UE, the identity of the SNPN from the list upon receiving a registration accept message.

In an aspect of the method, the method further includes deleting, by the UE, the identity of the SNPN from the list upon removing an S-NSSAI from a rejected NSSAI for a failed or revoked network slice-specific authentication and authorization (NSSAA) service.

In an aspect of the method, the network node comprises an access and mobility function (AMF).

In an aspect of the present disclosure, a user equipment includes at least one processor, and at least one memory storing instructions which, when executed by the at least one processor, cause the user equipment at least to perform at least to perform any of the foregoing methods.

In an aspect of the present disclosure, a processor-readable medium storing instructions which, when executed by at least one processor of an apparatus, cause the apparatus at least to perform any of the foregoing methods.

According to some aspects, there is provided the subject matter of the independent claims. Some further aspects are defined in the dependent claims.

### BRIEF DESCRIPTION OF THE DRAWINGS

Some example embodiments will now be described with reference to the accompanying drawings.
FIG. 1 is a diagram of an example embodiment of wireless networking between a network system and a user equipment (UE), according to one illustrated aspect of the disclosure;
FIG. 2 is a diagram of example components of a network system, according to one illustrated aspect of the disclosure;
FIG. 3 is a diagram of an example embodiment of signals and operations among a UE and an AMF, according to one illustrated aspect of the disclosure; and
FIG. 4 is a diagram of an example embodiment of components of a UE or of a network apparatus, according to one illustrated aspect of the present disclosure.

### DETAILED DESCRIPTION

In the following description, certain specific details are set forth in order to provide a thorough understanding of disclosed aspects. However, one skilled in the relevant art will recognize that aspects may be practiced without one or more of these specific details or with other methods, components, materials, etc. In other instances, well-known structures associated with transmitters, receivers, or transceivers have not been shown or described in detail to avoid unnecessarily obscuring descriptions of the aspects.

Reference throughout this specification to "one aspect" or "an aspect" means that a particular feature, structure, or characteristic described in connection with the aspect is included in at least one aspect. Thus, the appearances of the phrases "in one aspect" or "in an aspect" in various places throughout this specification are not necessarily all referring to the same aspect. Furthermore, the particular features, structures, or characteristics may be combined in any suitable manner in one or more aspects.

Embodiments described in the present disclosure may be implemented in wireless networking apparatuses, such as, without limitation, apparatuses utilizing Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, enhanced LTE (eLTE), 5G New Radio (5G NR), 5G Advance, 6G (and beyond) and 802.11ax (Wi-Fi 6), among other wireless networking systems. The term 'eLTE' here denotes the LTE evolution that connects to a 5G core. LTE is also known as evolved UMTS terrestrial radio access (EUTRA) or as evolved UMTS terrestrial radio access network (EUTRAN).

The present disclosure may use the term "serving network device" to refer to a network node or network device (or a portion thereof) that services a UE. As used herein, the terms "transmit to," "receive from," and "cooperate with," (and their variations) include communications that may or may not involve communications through one or more intermediate devices or nodes. The term "acquire" (and its variations) includes acquiring in the first instance or reacquiring after the first instance. The term "connection" may mean a physical connection or a logical connection.

The present disclosure uses 5G NR as an example of a wireless network and may use smartphones and/or extended reality headsets as an example of UEs. It is intended and shall be understood that such examples are merely illustrative, and the present disclosure is applicable to other wireless networks and user equipment.

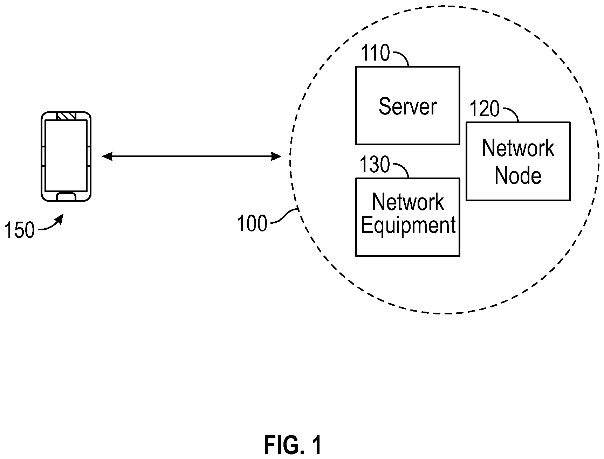

FIG. 1 is a diagram depicting an example of wireless networking between a network system 100 and a user equipment (UE) 150. The network system 100 may include one or more network nodes 120, one or more servers 110, and/or one or more network equipment 130 (e.g., test equipment). The network nodes 120 will be described in more detail below. As used herein, the term "network apparatus" may refer to any component of the network system 100, such as the server 110, the network node 120, the network equipment 130, any component(s) of the foregoing, and/or any other component(s) of the network system 100. Examples of network apparatuses include, without limitation, apparatuses implementing aspects of 5G NR, among others. The present disclosure describes embodiments related to 5GNR and embodiments that involve aspects defined by 3rd Generation Partnership Project (3GPP). However, it is contemplated that embodiments relating to other wireless networking technologies are encompassed within the scope of the present disclosure.

The following description provides further details of examples of network nodes. In a 5G NR network, a gNodeB (also known as gNB) may include, e.g., a node that provides new radio (NR) user plane and control plane protocol terminations towards the UE and that is connected via a NG interface to the 5G core (5GC), e.g., according to 3GPP TS 38.300 V16.6.0 (2021-06) section 3.2, which is hereby incorporated by reference herein.

A gNB supports various protocol layers, e.g., Layer 1 (L1) - physical layer, Layer 2 (L2), and Layer 3 (L3).

The layer 2 (L2) of NR is split into the following sublayers: Medium Access Control (MAC), Radio Link Control (RLC), Packet Data Convergence Protocol (PDCP) and Service Data Adaptation Protocol (SDAP), where, e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC quality of service (QoS) flows;
∘ Control channels include broadcast control channel (BCCH) and physical control channel (PCCH).

Layer 3 (L3) includes, e.g., radio resource control (RRC), e.g., according to 3GPP TS 38.300 V16.6.0 (2021-06) section 6, which is hereby incorporated by reference herein.

A gNB central unit (gNB-CU) includes, e.g., a logical node hosting, e.g., radio resource control (RRC), service data adaptation protocol (SDAP), and packet data convergence protocol (PDCP) protocols of the gNB or RRC and PDCP protocols of the en-gNB, that controls the operation of one or more gNB distributed units (gNB-DUs). The gNB-CU terminates the F1 interface connected with the gNB-DU. A gNB-CU may also be referred to herein as a CU, a central unit, a centralized unit, or a control unit.

A gNB Distributed Unit (gNB-DU) includes, e.g., a logical node hosting, e.g., radio link control (RLC), media access control (MAC), and physical (PHY) layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU. A gNB-DU may also be referred to herein as DU or a distributed unit.

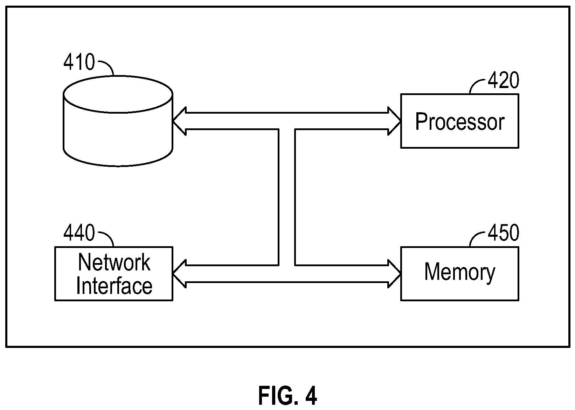

As used herein, the term "network node" may refer to any of a gNB, a gNB-CU, or a gNB-DU, or any combination of them. A RAN (radio access network) node or network node such as, e.g., a gNB, gNB-CU, or gNB-DU, or parts thereof, may be implemented using, e.g., an apparatus with at least one processor and/or at least one memory with processor-readable instructions ("program") configured to support and/or provision and/or process CU and/or DU related functionality and/or features, and/or at least one protocol (sub-)layer of a RAN (radio access network), e.g., layer 2 and/or layer 3. Different functional splits between the central and distributed unit are possible. An example of such an apparatus and components will be described in connection with FIG. 4 below.

The gNB-CU and gNB-DU parts may, e.g., be co-located or physically separated. The gNB-DU may even be split further, e.g., into two parts, e.g., one including processing equipment and one including an antenna. A central unit (CU) may also be called baseband unit/radio equipment controller/cloud-RAN/virtual-RAN (BBU/REC/C-RAN/V-RAN), open-RAN (O-RAN), or part thereof. A distributed unit (DU) may also be called remote radio head/remote radio unit/radio equipment/radio unit (RRH/RRU/RE/RU), or part thereof. Hereinafter, in various example embodiments of the present disclosure, a network node, which supports at least one of central unit functionality or a layer 3 protocol of a radio access network, may be, e.g., a gNB-CU. Similarly, a network node, which supports at least one of distributed unit functionality or a layer 2 protocol of the radio access network, may be, e.g., a gNB-DU.

A gNB-CU may support one or multiple gNB-DUs. A gNB-DU may support one or multiple cells and, thus, could support a serving cell for a user equipment (UE) or support a candidate cell for handover, dual connectivity, and/or carrier aggregation, among other procedures.

The user equipment (UE) 150 may be or include a wireless or mobile device, an apparatus with a radio interface to interact with a RAN (radio access network), a smartphone, an in-vehicle apparatus, an IoT device, or a M2M device, among other types of user equipment. Such UE 150 may include: at least one processor; and at least one memory including program code; where the at least one memory and the computer program code are configured to, with the at least one processor, cause the apparatus at least to perform certain operations, such as, e.g., RRC connection to the RAN. An example of components of a UE will be described in connection with FIG. 4. In embodiments, the UE 150 may be configured to generate a message (e.g., including a cell ID) to be transmitted via radio towards a RAN (e.g., to reach and communicate with a serving cell). In embodiments, the UE 150 may generate and transmit and receive RRC messages containing one or more RRC PDUs (packet data units). Persons skilled in the art will understand RRC protocol as well as other procedures a UE may perform.

With continuing reference to FIG. 1, in the example of a 5G NR network, the network system 100 provides one or more cells, which define a coverage area of the network system 100. As described above, the network system 100 may include a gNB of a 5G NR network or may include any other apparatus configured to control radio communication and manage radio resources within a cell. As used herein, the term "resource" may refer to radio resources, such as a resource block (RB), a physical resource block (PRB), a radio frame, a subframe, a time slot, a sub-band, a frequency region, a sub-carrier, a beam, etc. In embodiments, the network node 120 may be called a base station.

FIG. 1 provides an example and is merely illustrative of a network system 100 and a UE 150. Persons skilled in the art will understand that the network system 100 includes components not illustrated in FIG. 1 and will understand that other user equipment may be in communication with the network system 100.

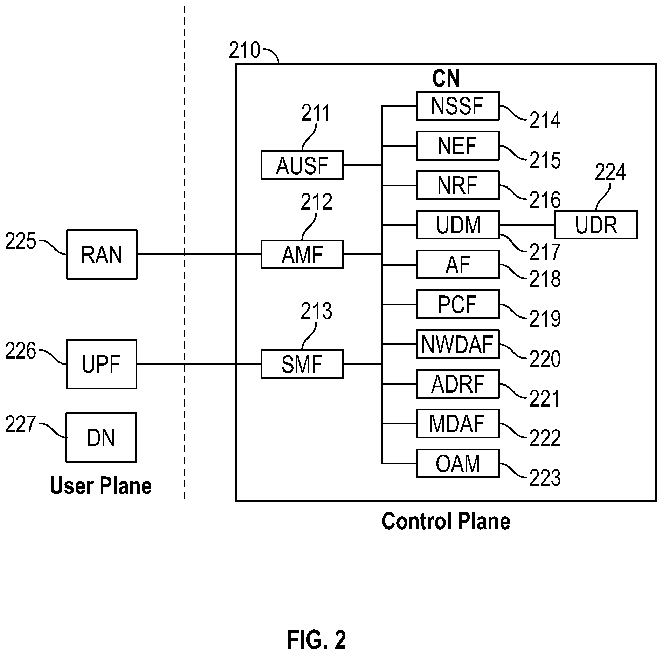

FIG. 2 is a block diagram of example components of the network system 100 of FIG. 1. A 5G NR network may be described as an example of the network system 100, and it is intended that aspects of the following description shall be applicable to other types of network systems, as well. The network system may operate in accordance with the signals and connections shown in FIG. 1 such that the UE 150 is in communication with the network system 100 through the radio access network 225. Additionally, the network system may be divided into user plane components and functions and control plane components and functions, as shown and described herein. Unless indicated otherwise, the terms "component", "function", and "service" may be used interchangeably herein, and they may refer to and be implemented by instructions executed by one or more processors.

Example functions of the components are described below. The example functions are merely illustrative, and it shall be understood that additional operations and functions may be performed by the components described herein. Additionally, the connections between components may be virtual connections over service-based interfaces such that any component may communicate with any other component. In this manner, any component may act as a service "producer," for any other component that is a service "consumer," to provide services for network functions.

For example, a core network 210 is described in the control plane of the network system. The core network 210 may include an authentication server function (AUSF) 211, an access and mobility function (AMF) 212, and a session management function (SMF) 213. The core network 210 may also include a network slice selection function (NSSF) 214, a network exposure function (NEF) 215, a network repository function (NRF) 216, and a unified data management function (UDM) 217, which may include a uniform data repository (UDR) 224.

Additional components and functions of the core network 210 may include an application function 218, policy control function (PCF) 219, network data analytics function (NWDAF) 220, analytics data repository function (ADRF) 221, management data analytics function (MDAF) 222, and operations and management function (OAM) 223.

The user plane includes the UE 150, a radio access network (RAN) 225, a user plane function (UPF) 226, and a data network (DN) 227. The RAN 225 may include one or more components described in connection with FIG. 1, such as one or more network nodes. However, the RAN 225 may not be limited to such components. The UPF 226 provides connection for data being transmitted over the RAN 225. The DN 226 identifies services from service providers, Internet access, and third party services, for example.

The AMF 212 processes connection and mobility tasks. The AUSF 211 receives authentication requests from the AMF 212 and interacts with UDM 217 to authenticate and validate network responses for determination of successful authentication. The SMF 213 conducts packet data unit (PDU) session management, as well as manages session context with the UPF 226.

The NSSF 214 may select a network slicing instance (NSI) and determine the allowed network slice selection assistance information (NSSAI). This selection and determination is utilized to set the AMF 212 to provide service to the UE 150. The NEF 215 secures access to network services for third parties to create specialized network services. The NRF 216 acts as a repository to store network functions to allow the functions to register with and discover each other.

The UDM 217 generates authentication vectors for use by the AUSF 211 and ADM 212 and provides user identification handling. The UDM 217 may be connected to the UDR 224 which stores data associated with authentication, applications, or the like. The AF 218 provides application services to a user (e.g., streaming services, etc.). The PCF 219 provides policy control functionality. For example, the PCF 219 may assist in network slicing and mobility management, as well as provide quality of service (QoS) and charging functionality.

The NWDAF 220 collects data (e.g., from the UE 150 and the network system) to perform network analytics and provide insight to functions that utilize the analytics in the providing of services. The ADRF 221 allows the storage, retrieval, and removal of data and analytics by consumers. The MDAF 222 provides additional data analytics services for network functions. The CAM 223 provides provisioning and management processing functions to manage elements in or connected to the network (e.g., UE 150, network nodes, etc.).

FIG. 2 is merely an example of components of a network system, and variations are contemplated to be within the scope of the present disclosure. In embodiments, the network system may include other components not illustrated in FIG. 2. In embodiments, the network system may not include every component illustrated in FIG. 2. In embodiments, the components and connections may be implemented with different connections than those illustrated in FIG. 2. Such and other embodiments are contemplated to be within the scope of the present disclosure.

Although further detail is provided below, as mentioned above, in various embodiments, a UE may be capable of operating in N1 mode, where "N1" refers to the interface between the UE and the AMF. Therefore, in order to operate in N1 mode, a UE needs to support non-access stratum (NAS) protocols in a 5G system (5GS), (e.g., 5G mobility management (5GMM) protocol). In order to establish communications, the UE attempts to register to a network (e.g., a first network) by transmitting a registration request using a non-access stratum (NAS) protocol, for example, the 5GMM protocol. Upon receiving the registration request message from the UE, the network, via a network component (e.g., the AMF), may reject the request if no network slices are available, and transmit a registration reject message to the UE (e.g., via a network node). In various embodiments, the registration reject message may include a 5GMM cause value #62 message (e.g., indicating all single-network slice selection assistance informations (S-NSSAIs) are rejected or not available).

Upon receiving the registration reject message, the UE, in various embodiments, may disable N1 mode capability. However, if another radio access technology (RAT) is not provided or network selection process is initiated, the UE may re-enable N1 mode capability and continue to send registration request messages to the same network to establish communications. In various embodiments, this may result in a type of ping-pong effect where the UE and network continue to send unnecessary registration request and registration reject messages, respectively, to one another, resulting in overuse of network resources.

That is, if a UE disabled the N1 mode capability for a network because all S-NSSAIs in the configured NSSAI were rejected with cause value #62 (e.g.,"S-NSSAI not available in the current public land mobile network (PLMN) or stand alone public network (SNPN)" or "S-NSSAI not available due to the failed or revoked network slice-specific authentication and authorization"), the UE may re-enable the N1 mode capability for the network and the UE may continue to transmit the registration request to the same network (e.g., via the RAN) again and again as shown in the current procedure in TS 24.501, for example.

As a result, the UE will continue to receive 5GMM cause value #62 messages over again regarding no network slices being available in either of the two variant messages described above, which will continue to trigger the UE to disable the N1 mode capability and in cases where the network recurrently does not provide an appropriate RAT, re-enable the N1 mode capability for the network entering in a potential loop.

Accordingly, although further detail is provided below, provided herein is a methodology in which the UE remembers (e.g., logs) the identifiers of networks for which no network slices are available in order to avoid continuous retransmission of registration request messages until an event (e.g., a first event) occurs.

As used herein, a communication with a radio access network (RAN) may refer to and mean a communication with a portion of a RAN, such as with a network node (e.g., a DU and/or a CU), or another portion of a RAN. As used herein, a communication with a core network may refer to and mean a communication with one or more services/applications of the core network, such as AMF or another service of a core network.

As used herein, in various embodiments, the term "user equipment" or "UE" may be interchangeable with the term "mobile station" or "MS". For example, in various embodiments, the term user equipment, or UE, may be used to identify a mobile station, or MS, connected to a network, or the term mobile station, or MS, may be used to identify a user equipment, or UE, connected to a network.

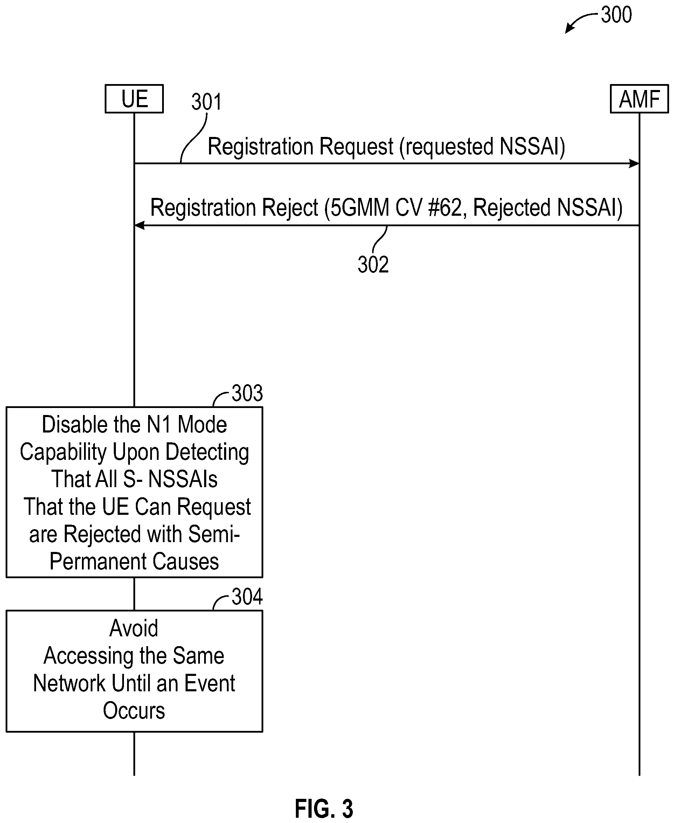

In accordance with the brief description, FIG. 3 is a diagram of an example embodiment of signals and operations 300 among a UE and an AMF, according to one illustrated aspect of the disclosure. The following paragraphs will describe various signals and operations. It will be understood that a described signal may have associated operations and a described operation may have associated signals.

At operation 301, the UE transmits a registration request to the AMF and the AMF receives the registration request. The registration request includes a request for NSSAI (S-NSSAIs). In various embodiments, persons of skill in the art may appreciate that the registration request is transmitted in accordance with TS 24.501, for example.

Upon receipt of the registration request message from the UE, the AMF determines whether network slices are available and that S-NSSAI can be accepted. If network slices are not available, at operation 302, the AMF transmits a registration reject message to the UE and the UE receives the registration reject message. In various embodiments, the registration reject message may include a 5GMM cause #62 "no network slices available" message. The registration reject message, in various embodiments, includes, in the rejected NSSAI of the registration reject message, all the S-NSSAIs which were included in the requested NSSAI. In various embodiments, the registration reject message may include as a cause for no network slices available the cause "S-NSSAI not available in the current PLMN or SNPN" or cause "S-NSSAI not available due to the failed or revoked network slice-specific authentication and authorization". In various embodiments, the causes "S-NSSAI not available in the current PLMN or SNPN" or cause "S-NSSAI not available due to the failed or revoked network slice-specific authentication and authorization" may be considered as semi-permanent causes.

Accordingly, once the UE receives the registration reject message from the AMF, at operation 303, and one or more conditions are met (e.g., the UE detects that all S-NSSAIs that the UE can request are rejected with, for example, semi-permanent causes), the UE disables N1 mode capability.

At operation 304, the UE takes action to avoid accessing the same network unless there is a change. In various embodiments, the change may include an event (e.g., first event) occurring to cause the UE to begin accessing the network for which the UE received an indication that no network slices were available.

In various embodiments, at operation 304, the UE may maintain a list of PLMNs where the N1 mode capability was disabled upon receipt of the registration reject message from the network with 5GMM cause #62 "no network slices available", as PLMNs where N1 mode is not allowed due to network slice unavailability. In various embodiments, when the UE disables its N1 mode capability upon receipt of a registration reject message from the network with 5GMM cause #62 "no network slices available", the UE may add the identity, or identifier, of the PLMN to a list of PLMNs where N1 mode is not allowed due to network slice unavailability and may start a timer (which may be referred to as *T_{NSU}*) if the timer *T_{NSU}* is not already running. In various embodiments, the timer *T_{NSU}* may be started after (e.g., upon, based on) the disabling of the N1 mode capability. The number of PLMNs that the UE may store where N1 mode is not allowed due to network slice unavailability may be specific to an implementation specific, and may include one or more. Further, in various embodiments, the value of timer *T_{NSU}* may be implementation specific to the UE, but in various embodiments does not exceed the maximum possible value of background scanning timer *T* (e.g., the background scanning timer *T* as defined in 3GPP TS 23.122).

In various embodiments, in automatic PLMN selection, the UE may exploit the stored information by not considering (e.g., discard/disregard) PLMNs where N1 mode is not allowed due to network slice unavailability as PLMN selection candidates for NG-RAN access technology, unless no other PLMN is available. In various embodiments, the PLMN may be selected as a PLMN candidate for NG-RAN access technology if it is available in another RAT.

In various embodiments, the UE may delete stored information on PLMNs where N1 mode is not allowed due to network slice unavailability when the UE is switched off, a universal subscriber identity module (USIM) is removed from the UE, the timer *T_{NSU}* expires, the UE receives a registration accept message containing the network slicing indication information element (IE) that includes a network slicing subscription change indication set to "network slicing subscription changed", or the UE removes an S-NSSAI from a rejected NSSAI for the failed or revoked network slice-specific authentication and authorization (NSSAA) service.

In various embodiments, the UE performs network selection only on PLMNs that are not in the list of PLMNs where N1 mode is not allowed due to network slice unavailability.

In various embodiments, if the UE supports neither access to an SNPN using credentials from a credentials holder nor equivalent SNPNs, the UE may maintain a list of SNPNs where the N1 mode capability was disabled upon receipt of a registration reject message from the network with 5GMM cause #62 "no network slices available". If the UE supports access to an SNPN using credentials from a credentials holder which is not a PLMN, equivalent SNPNs, or both, in various embodiments, the UE may maintain one or more lists of SNPNs where the N1 mode capability was disabled upon receipt of a registration reject message from the network with 5GMM cause #62 "no network slices available", with each item in the list associated with an entry of the "list of subscriber data".

In various embodiments, if the UE supports access to an SNPN using credentials from a credentials holder which is a PLMN, the UE may maintain a list of SNPNs where the N1 mode capability was disabled upon receipt of a registration reject message from the network with 5GMM cause #62 "no network slices available", associated with the PLMN subscription. If the UE supports access to an SNPN using credentials from a credentials holder, equivalent SNPNs, or both, in various embodiments, the UE may use the list associated with the selected entry of the "list of subscriber data" or the selected PLMN subscription. When the UE disables its N1 mode capability upon receipt of a registration reject message from the network with 5GMM cause #62 "no network slices available", the UE may perform in accordance with the below.

In various embodiments, the UE may add the identity of the SNPN to the list of SNPNs where N1 mode is not allowed due to network slice unavailability and start a timer (which may be referred to as *T_{NSU_SNPN}*) if timer *T_{NSU_SNPN}* is not already running. In various embodiments, the timer *T_{NSU_SNPN}* may be started after the disabling of the N1 mode capability. The number of identities of SNPNs that the UE can store where N1 mode is not allowed due to network slice unavailability may be implementation specific, but in various embodiments is at least one. The value of timer *T_{NSU_SNPN}* may be implementation specific to the UE in various embodiments.

In various embodiments, in automatic SNPN selection, the UE may exploit the stored information by not considering (e.g., discard/disregard) SNPNs where N1 mode is not allowed due to network slice unavailability as SNPN selection candidates for NG-RAN access technology, unless no other SNPN is available.

In various embodiments, the UE may delete stored information on SNPNs where N1 mode is not allowed due to network slice unavailability when the UE is switched off, the USIM is removed, the entries of the "list of subscriber data" for the SNPNs are updated, the timer *T_{NSU_SNPN}* expires, the UE receives a registration accept message containing the Network slicing indication IE that includes a network slicing subscription change indication set to "network slicing subscription changed", or the MS removes an S-NSSAI from a rejected NSSAI for the failed or revoked NSSAA service.

The operations of FIG. 3 are merely illustrative, and variations are contemplated to be within the scope of the present disclosure. In embodiments, the operations may include other operations not illustrated in FIG. 3. In embodiments, the operations may not include every operation illustrated in FIG. 3. In embodiments, the operations may be implemented in a different order than that illustrated in FIG. 3. Such and other embodiments are contemplated to be within the scope of the present disclosure. Persons of skill in the art will appreciate that, although various example components are described as perform various functions, other components may perform those functions described in the method 300. Furthermore, although the above embodiments are described based on a 5G system (5GS), the embodiments can applied to different generations of systems.

The following describes operations from the perspective of the UE. From such a perspective, method includes transmitting, by a UE, a first message to a network node, the first message including a request for access to a first network according to an NAS protocol. The UE may receive a second message from the network node, the second message including an indication of no network slice being available to service access to the first network requested by the UE. The UE may disable a capability to access networks using the NAS protocol based upon the receiving the second message, store an identity of the first network, and after storing, exploit the stored identity of the first network, by the UE, during a network selection process.

Referring now to FIG. 4, there is shown a block diagram of example components of a UE or a network apparatus (e.g., of a RAN or a core network). The apparatus includes an electronic storage 410, a processor 420, a network interface 440, and a memory 450. The various components may be communicatively coupled with each other. The processor 420 may be and may include any type of processor, such as a single-core central processing unit (CPU), a multi-core CPU, a microprocessor, a digital signal processor (DSP), a System-on-Chip (SoC), or any other type of processor. The memory 450 may be a volatile type of memory, e.g., RAM, or a non-volatile type of memory, e.g., NAND flash memory. The memory 450 includes processor-readable instructions that are executable by the processor 420 to cause the apparatus to perform various operations, including those mentioned herein, such as the operations of FIG. 3.

The electronic storage 410 may be and include any type of electronic storage used for storing data, such as hard disk drive, solid state drive, optical disc, and/or other non-transitory computer-readable mediums, among other types of electronic storage. The electronic storage 410 stores processor-readable instructions for causing or configured for causing the apparatus to perform its operations and also stores data associated with such operations, such as storing data relating to 5G NR standards, among other data. The network interface 440 may implement wireless networking technologies such as 5G NR and/or other wireless networking technologies.

The components shown in FIG. 4 are merely examples, and persons skilled in the art will understand that an apparatus includes other components not illustrated and may include multiples of any of the illustrated components. Such and other embodiments are contemplated to be within the scope of the present disclosure.

Further embodiments of the present disclosure include the following examples.

Example 1.1. An apparatus, comprising:
means for transmitting, by a user equipment (UE), a registration request message to a network node according to a non-access stratum (NAS) protocol, the registration request message including a request for one or more single-network slice selection assistance informations (S-NSSAIs) in a first network;
means for receiving, by the UE, a registration reject message from the network node, the registration reject message including a 5G system mobility management (5GMM) cause value #62 "no network slices available" indication;
means for disabling, by the UE, N1 mode capability for the first network based upon the receiving the registration reject message;
means for storing, by the UE, an identity of the first network; and
means for, after storing, exploiting the stored identity of the first network, by the UE, during a network selection process.

Example 1.2. The apparatus of example 1.1, wherein the 5GMM cause value #62 "no network slices available" indication includes a cause "S-NSSAI not available due the failed or revoked network slice-specific authentication" indication.

Example 1.3. The apparatus of example 1.1, wherein the first network is a public land mobile network (PLMN) or a stand-alone public network (SNPN).

Example 1.4. The apparatus of example 1.3, wherein the 5GMM cause value #62 "no network slices available" indication includes a cause "S-NSSAI not available in the current PLMN or SNPN" indication.

Example 1.5. The apparatus as in any of examples 1.3 to 1.4, further comprising adding, by the UE, the identity of the PLMN to a list of PLMNs for which the UE disabled N1 mode capability.

Example 1.6. The apparatus of example 1.5, further comprising starting a timer after disabling N1 mode capability.

Example 1.7. The apparatus of example 1.6, wherein the timer is a *T_{NSU}* timer.

Example 1.8. The apparatus of example 1.7, wherein a value of the timer *T_{NSU}* does not exceed a background timer value.

Example 1.9. The apparatus as in any of examples 1.3 to 1.8, further comprising discarding, by the UE, the PLMN for which the identity was added to the list during the network selection process.

Example 1.10. The apparatus as in any of examples 1.5 to 1.8, further comprising deleting, by the UE, the identity of the PLMN from the list upon the UE being switched off.

Example 1.11. The apparatus as in any of examples 1.5 to 1.8, further comprising deleting, by the UE, the identity of the PLMN from the list upon removal of a universal subscriber identity module from the UE.

Example 1.12. The apparatus as in any of examples 1.5 to 1.8, further comprising deleting, by the UE, the identity of the PLMN from the list upon receiving a registration accept message.

Example 1.13. The apparatus as in any of examples 1.5 to 1.8, further comprising deleting, by the UE, the identity of the PLMN from the list upon removing an S-NSSAI from a rejected NSSAI for a failed or revoked network slice-specific authentication and authorization (NSSAA) service.

Example 1.14. The apparatus as in any of examples 1.3 to 1.4, further comprising adding, by the UE, the identity of the SNPN to a list of SNPNs for which the UE disabled N1 mode capability.

Example 1.15. The apparatus of example 1.14, further comprising starting a timer after disabling N1 mode capability.

Example 1.16. The apparatus of example 1.15, wherein the timer is a *T_{NSU_SNPN}* timer.

Example 1.17. The apparatus of example 1.16, wherein a value of the timer *T_{NSU_SNPN}* does not exceed a background timer value.

Example 1.18. The apparatus as in any of examples 1.15 to 1.17, further comprising discarding, by the UE, the SNPN for which the identity was added to the list during the network selection process.

Example, 1.19. The apparatus as in any of examples 1.15 to 1.17, further comprising deleting, by the UE, the identity of the SNPN from the list upon the UE being switched off.

Example 1.20. The apparatus as in any of examples 1.15 to 1.17, further comprising deleting, by the UE, the identity of the SNPN from the list upon removal of a universal subscriber identity module from the UE.

Example 1.21. The apparatus as in any of examples 1.15 to 1.17, further comprising deleting, by the UE, the identity of the SNPN from the list upon receiving a registration accept message.

Example 1.22. The apparatus as in any of examples 1.15 to 1.17, further comprising deleting, by the UE, the identity of the SNPN from the list upon removing an S-NSSAI from a rejected NSSAI for a failed or revoked network slice-specific authentication and authorization (NSSAA) service.

Example 1.23. The apparatus of example 1.1, wherein the network node comprises an access and mobility function (AMF).

The embodiments and aspects disclosed herein are examples of the present disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.

The phrases "in an aspect," "in aspects," "in various aspects," "in some aspects," or "in other aspects" may each refer to one or more of the same or different aspects in accordance with this present disclosure. The phrase "a plurality of" may refer to two or more.

The phrases "in an embodiment," "in embodiments," "in various embodiments," "in some embodiments," or "in other embodiments" may each refer to one or more of the same or different embodiments in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

Any of the herein described methods, programs, algorithms or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While aspects of the present disclosure have been shown in the drawings, it is not intended that the present disclosure be limited thereto, as it is intended that the present disclosure be as broad in scope as the art will allow and that the specification be read likewise. Therefore, the above description should not be construed as limiting, but merely as exemplifications of particular aspects. Those skilled in the art will envision other modifications within the scope and spirit of the claims appended hereto.

## Claims

1. A method, comprising:
transmitting, by a user equipment (UE), a registration request message to a network node according to a non-access stratum (NAS) protocol, the registration request message including a request for one or more single-network slice selection assistance informations (S-NSSAIs) in a first network;
receiving, by the UE, a registration reject message from the network node, the registration reject message including a 5G system mobility management (5GMM) cause value #62 "no network slices available" indication;
disabling, by the UE, N1 mode capability for the first network based upon the receiving the registration reject message;
storing, by the UE, an identity of the first network; and
after storing, exploiting the stored identity of the first network, by the UE, during a network selection process.

2. The method of claim 1, wherein the 5GMM cause value #62 "no network slices available" indication includes a cause "S-NSSAI not available due the failed or revoked network slice-specific authentication" indication.

3. The method of claim 1, wherein the first network is a public land mobile network (PLMN) or a stand-alone public network (SNPN).

4. The method of claim 3, wherein the 5GMM cause value #62 "no network slices available" indication includes a cause "S-NSSAI not available in the current PLMN or SNPN" indication.

5. The method as in any of claims 3 to 4, further comprising adding, by the UE, the identity of the PLMN to a list of PLMNs for which the UE disabled N1 mode capability.

6. The method of claim 5, further comprising starting a timer after disabling N1 mode capability.

7. The method of claim 6, wherein the timer is a *T_{NSU}* timer.

8. The method of claim 7, wherein a value of the timer *T_{NSU}* does not exceed a background timer value.

9. The method as in any of claims 3 to 8, further comprising discarding, by the UE, the PLMN for which the identity was added to the list during the network selection process.

10. The method as in any of claims 5 to 8, further comprising deleting, by the UE, the identity of the PLMN from the list upon the UE being switched off.

11. The method as in any of claims 5 to 8, further comprising deleting, by the UE, the identity of the PLMN from the list upon removal of a universal subscriber identity module from the UE.

12. The method as in any of claims 5 to 8, further comprising deleting, by the UE, the identity of the PLMN from the list upon receiving a registration accept message.

13. The method as in any of claims 5 to 8, further comprising deleting, by the UE, the identity of the PLMN from the list upon removing an S-NSSAI from a rejected NSSAI for a failed or revoked network slice-specific authentication and authorization (NSSAA) service.

14. The method as in any of claims 3 to 4, further comprising adding, by the UE, the identity of the SNPN to a list of SNPNs for which the UE disabled N1 mode capability.

15. The method of claim 14, further comprising starting a timer after disabling N1 mode capability.

16. The method of claim 15, wherein the timer is a *T_{NSU_SNPN}* timer.

17. The method of claim 16, wherein a value of the timer *T_{NSU_SNPN}* does not exceed a background timer value.

18. The method as in any of claims 15 to 17, further comprising discarding, by the UE, the SNPN for which the identity was added to the list during the network selection process.

19. The method as in any of claims 15 to 17, further comprising deleting, by the UE, the identity of the SNPN from the list upon the UE being switched off.

20. The method as in any of claims 15 to 17, further comprising deleting, by the UE, the identity of the SNPN from the list upon removal of a universal subscriber identity module from the UE.

21. The method as in any of claims 15 to 17, further comprising deleting, by the UE, the identity of the SNPN from the list upon receiving a registration accept message.

22. The method as in any of claims 15 to 17, further comprising deleting, by the UE, the identity of the SNPN from the list upon removing an S-NSSAI from a rejected NSSAI for a failed or revoked network slice-specific authentication and authorization (NSSAA) service.

23. The method of claim 1, wherein the network node comprises an access and mobility function (AMF).

24. A user equipment (UE), comprising:
at least one processor; and
at least one memory storing instructions which, when executed by the at least one processor, cause the user equipment at least to perform a method as in any of claims 1-23.

25. A processor-readable medium storing instructions which, when executed by at least one processor of an apparatus, cause the apparatus at least to perform a method as in any one of claims 1-23.
